# EUROPÄISCHE PATENTSCHRIFT

(11) **EP 1 204 312 B1**
(45) Veröffentlichungstag und Bekanntmachung des Hinweises auf die Patenterteilung: **12.03.2003**
(21) Anmeldenummer: 00967532.3
(22) Anmeldetag: 18.08.2000
(51) Int. Cl.: A01K 27/00, B65H 75/44

(54) **HUNDE-ROLLLEINE**
ROLL-UP LEASH FOR DOGS
LAISSE RETRACTABLE POUR CHIENS

(30) Priorität: 18.08.1999 DE 19938581; 21.07.2000 DE 10035583
(43) Veröffentlichungstag der Anmeldung: 15.05.2002
(73) Patentinhaber: Arnold, Gerhard, 65197 Wiesbaden (DE)
(72) Erfinder: Arnold, Gerhard, 65197 Wiesbaden (DE)
(74) Vertreter: Schlagwein, Udo, Dipl.-Ing.
(86) Internationale Anmeldenummer: DE0002834
(87) Internationale Veröffentlichungsnummer: WO01011948

(56) Entgegenhaltungen:
- EP-A- 0 488 074
- US-A- 3 693 596

## Beschreibung

Die Erfindung betrifft eine Hunde-Rollleine, welche in einem Gehäuse eine in Aufwickelrichtung vorgespannte Seiltrommel lagert, die koaxial mit einem Zahnrad verbunden ist und bei der eine einen gehäusefesten Anschlag aufweisende Rücklaufsperre zum Blockieren des Zahnrades in einer Drehrichtung vorgesehen sind.

Eine Hunde-Rollleine der vorstehenden Art ist Gegenstand der US 3,693,396. Bei der in dieser Schrift erläuterten Hunde-Rollleine sind zwei entgegengesetzt wirkende Rücklaufsperren vorgesehen, welche durch Betätigung eines Hebels wahlweise wirksam gemacht werden können.

Die Rücklaufsperren weisen jeweils eine federnde Klinke auf, die bei der einen Drehrichtung des Zahnrades in die Verzahnung gelangt, bei der anderen Drehrichtung jedoch über die Verzahnung ratscht. Nachteilig bei solchen Klinkengesperren ist es, dass bei der freigegebenen Drehrichtung das Klinkengesperre über die Verzahnung ratscht und dadurch relativ starke Geräusche erzeugt, was bei Hunde-Rollleinen stark störend ist. Weiterhin kommt es durch das Ratschen des Klinkengesperres über die Verzahnung zu einem Verschleiß des Zahnrades und des Klinkengesperres. Hiervon abgesehen, müsste bei einer Hunde-Rollleine mit Klinkengesperre die Rückholfeder relativ kräftig sein, um die Reibung des Klinkengesperres überwinden zu können, wodurch die Hunde-Rollleine unerwünscht schwergängig würde.

Die EP 0 488 074 A1 zeigt auch schon eine Kabeltrommel für ein elektrisches Kabel, bei der eine Rücklaufsperre ein Reibrad aufweist, dessen Achse derart in einer Nut verschieblich gehalten ist, dass das Reibrad bei Drehrichtungsumkehr zwangsläufig in eine die Kabeltrommel sperrende Stellung gelangt, sofern nicht eine Drucktaste niedergedrückt wird.

Der Erfindung liegt das Problem zugrunde, eine Hunde-Rollleine der eingangs genannten Art zu entwickeln, welche möglichst geräuschs- und reibungsarm arbeitet und möglichst geringem Verschleiß unterliegt. Weiterhin soll die Möglichkeit eines unbeabsichtigten Abrollens der Hunde-Rollleine ausgeschlossen werden.

Dieses Problem wird erfindungsgemäß dadurch gelöst, dass die Rücklaufsperre durch ein mit dem Zahnrad kämmendes Ritzel gebildet ist, welches eine Achse hat, die in einer zumindest in etwa koaxial zu der Drehachse des Zahnrades verlaufenden Führung des Gehäuses verschiebbar gelagert ist, dass das Ritzel oder eine mit ihm verbundene Klinke in einer Endstellung der Achse gegen den gehäusefesten Anschlag anliegt, bei in entgegengesetzter Position verschobener Achse jedoch frei drehbar gehalten ist, und dass entgegen der Kraft einer Feder wirkende Mittel zum Trennen des Anschlags und des Ritzels vorgesehen sind.

Bei einer solchen Hunde-Rollleine kann sich das Ritzel in einer Drehrichtung des Zahnrades frei drehen. Es verursacht deshalb keine Geräusche und führt zu keinem erhöhten Verschleiß. Kehrt man die Drehrichtung um, dann bewegt sich die Achse des Ritzels in eine solche Stellung, dass die Klinke gegen den gehäusefesten Anschlag gelangt und es dadurch zu einem zuverlässigen Sperren des Zahnrades kommt. Durch die Erfindung wird das Sperrprinzip der bisher gebräuchlichen Hunde-Rollleinen, bei denen die Sperrwirkung durch Drücken einer Taste erreicht wird, umgekehrt. Hält der Hundeführer die erfindungsgemäße Hunde-Rollleine lediglich am Griff, dann ist sichergestellt, dass die Leine sich nicht von der Seiltrommel abwickeln kann. Wenn der Hundeführer seinem Hund bewusst mehr Bewegungsraum gewähren will, dann muss er den Schieber gegen die Kraft der Feder verschieben. Durch die Erfindung wird somit sichergestellt, dass der Hund nicht plötzlich losspringen und sich vom Hundeführer entfernen kann. Zusätzlich bietet die erfindungsgemäße Hunde-Rollleine den Vorteil, dass zum Heranholen des Hundes der Hundeführer lediglich das von Hand zu haltende Teil wiederholt in Richtung des Hundes und wieder zurück bewegen muss. Dabei rollt sich die Leine entsprechend auf und kann sich - ohne dass man hierzu eine Drucktaste betätigen muss - nicht wieder abwickeln.

Eine konstruktiv besonders einfache Ausführungsform besteht darin, dass der Anschlag an einem Schieber vorgesehen ist, welcher teilweise aus dem Gehäuse ragt und durch Führungen gegen die Kraft der Feder aus einer Sperrstellung in einer das Ritzel freigebenden Stellung verschiebbar angeordnet ist.

Alternativ ist es jedoch auch möglich, dass die Achse zum Verschieben von Hand aus der Führung des Gehäuses herausragt.

Wenn hohe Kräfte auf die Hunde-Rollleine wirken, dann ist eine Weiterbildung der Erfindung vorteilhaft, bei der sie zwei parallel zueinander angeordnete Zahnräder und entsprechend zwei parallel zueinander angeordnete Ritzel hat und dass die Ritzel durch einen die Klinke aufweisenden Zylinder miteinander verbunden sind. Hierdurch gewinnt man Platz für eine entsprechend dem gegenseitigen Abstand der Zahnräder breite Klinke und einen entsprechend breiten Anschlag, so dass in Sperrstellung besonders hohe Kräfte übertragen werden können und die Klinke auch dann nicht ausbricht, wenn sie mit relativ hoher Geschwindigkeit gegen den Anschlag schlägt.

Die Sicherheitsfunktion der Vermeidung eines unbeabsichtigen Abrollens der Leine kann vorübergehend aufgehoben werden, wenn am Gehäuse ein manuell betätigbarer Sperrschieber zum Blockieren des den Anschlag aufweisenden Schiebers in einer das Ritzel freigebenden Stellung angeordnet ist.

Die Zähne der Ritzel und der beiden Zahnräder vermögen besonders hohen Kräften standzuhalten, wenn gemäß einer anderen Weiterbildung der Erfindung die Ritzel und die Zahnräder jeweils an einer Seite ihrer Zähne eine stirnseitig mit den Zähnen verbundene Scheibe aufweisen.

Zur weiteren Verdeutlichung der Erfindung wird nachfolgend auf die Zeichnung Bezug genommen. Diese zeigt in
- Fig.1: eine schematische Seitenansicht des Getriebes der erfindungsgemäßen Hunde-Rollleine,
- Fig.2: einen Schnitt durch das Getriebe nach Fig.1,
- Fig.3: eine schematische Seitenansicht der Hunde-Rollleine, wobei einzelne Teile des Getriebeinneren sichtbar dargestellt wurden,
- Fig.4: einen senkrechten Schnitt durch die HundeRollleine,
- Fig.5: einen Querschnitt durch ein Ritzel des Getriebes,
- Fig.6: eine Seitenansicht des Ritzels,
- Fig.7: einen Längsschnitt durch das Ritzel.

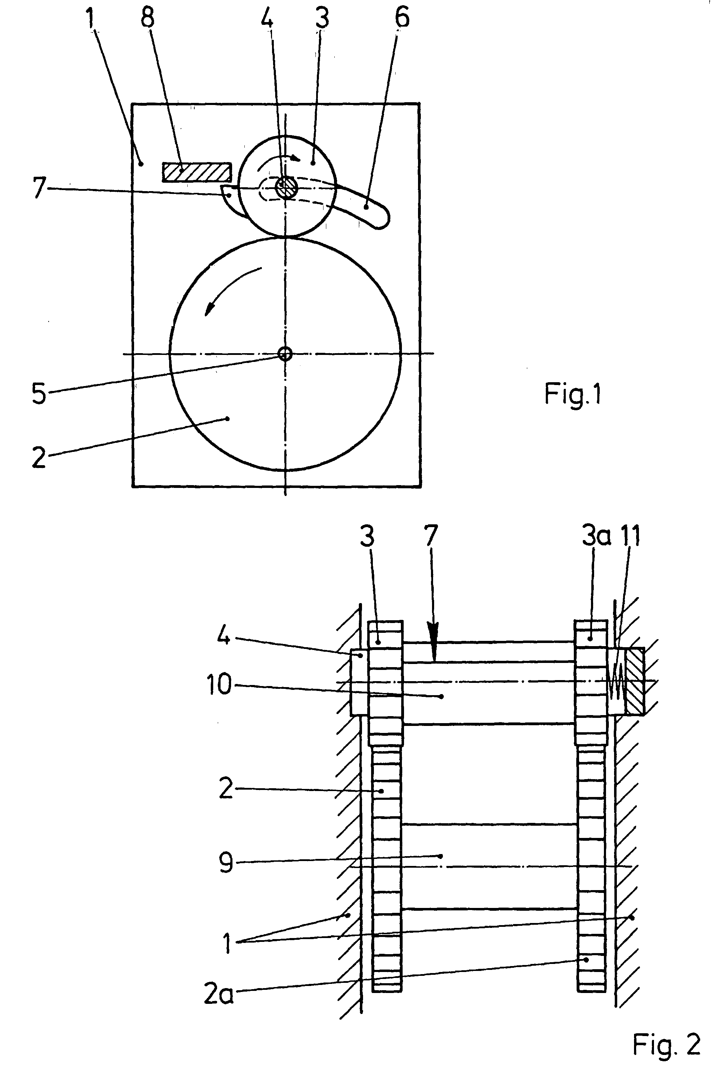

Die Figur 1 zeigt ein Gehäuse 1, welches ein Zahnrad 2 und ein darin kämmendes Ritzel 3 lagert. Das Ritzel 3 hat eine Achse 4, die in einer koaxial zur Drehachse 5 des Zahnrades 2 verlaufenden Führung 6 verschieblich angeordnet ist. Das Ritzel 3 ist mit einer Klinke 7 drehfest verbunden, welche in der dargestellten Position der Achse 4 gegen einen gehäusefesten Anschlag 8 zu gelangen vermag.

Dreht sich das Zahnrad 2 im Uhrzeigersinn, dann wandert die Achse 4 in der Führung 6 in Figur 1 gesehen nach rechts, so dass die Klinke 7 nicht mehr gegen den Anschlag 8 gelangen kann. Sobald jedoch die Drehrichtung des Zahnrades 2 wieder entgegengesetzt zum Uhrzeigersinn erfolgt, nimmt das Ritzel wieder die gezeigte Stellung ein, in der es zu einem Sperren des Ritzels 3 und damit des Zahnrades 2 kommt.

Die Figur 2 zeigt, dass zwei Zahnräder 2, 2a Seitenteile einer Seiltrommel 9 bilden können..Entsprechend sind bei dieser Ausführungsform zwei Ritzel 3, 3a vorgesehen. Die Klinke 7 ist gemäß Figur 2 an einem Zylinder 10 zwischen den Ritzeln 3, 3a vorgesehen. Eine Feder 11 sorgt dafür, dass die Ritzel 3, 3a sich nicht zu leichtgängig verdrehen, so dass eine Verschiebung der Achse 4 in der in Figur 1 gezeigten Führung 6 sichergestellt ist.

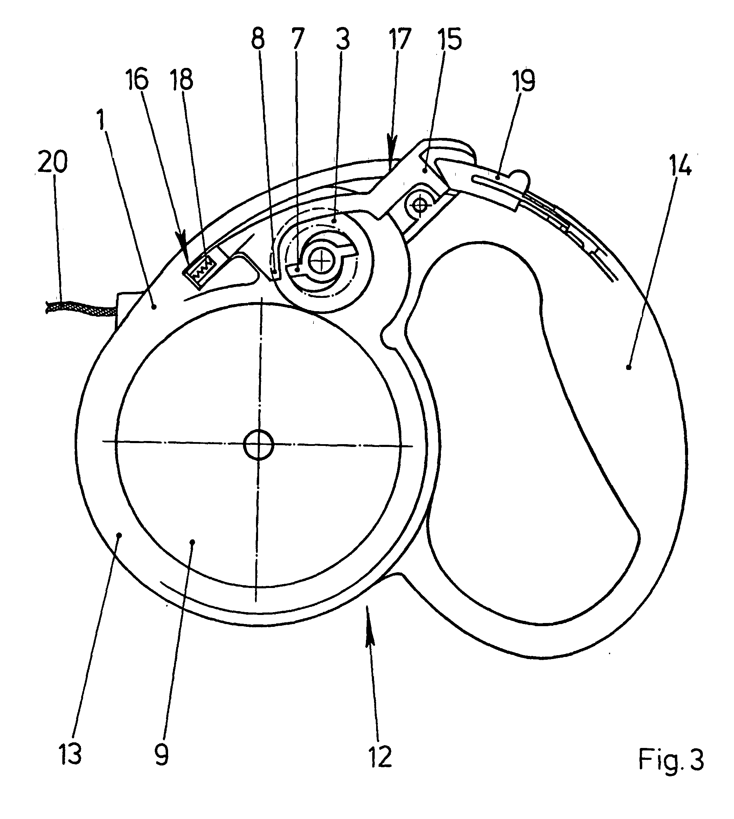

Die Figur 3 zeigt eine Hunde-Rollleine 12, bei der das Gehäuse 1 einen Getrieberaum 13 mit der Seiltrommel 9 und dem Ritzel 3 aufweist. Außenseitig am Gehäuse 1 ist ein Griff 14 angeformt. Aus dem Gehäuse 1 heraus ragt ein Endbereich eines Schiebers 15, welcher den Anschlag 8 aufweist. In der dargestellten Position befindet sich dieser Anschlag 8 außerhalb des Flugkreises der Klinke 7 des Ritzels 3.

Führungen 16, 17 ermöglichen es dem Schieber 15, sich um einen festgelegten Betrag schräg nach oben aus dem Gehäuse 1 heraus zu bewegen, wodurch der Anschlag 8 in den Flugkreis der Klinke 7 gelangt. Eine Feder 18 spannt den Schieber 15 in der nicht gezeigten Sperrstellung vor. In der dargestellten Stellung verhindert ein außenseitig am Gehäuse 1 vorgesehener, von Hand zu verschiebender Sperrschieber 19, welcher in den Schieber 15 eingreift, dass der Schieber 15 sich weiter nach außen zu bewegen vermag.

Ebenfalls gezeigt ist in Figur 3 ein Teilbereich einer Leine 20, an deren freiem Ende ein Hund zu befestigen ist. In der gezeigten Stellung des Schiebers 15 kann sich die Seiltrommel 9 frei in beide Drehrichtungen drehen, so dass der Hund entsprechend der Länge der Leine 20 frei laufen kann.

Schiebt man den Sperrschieber 19 zurück, dann wird der Schieber 15 durch die Feder 18 schräg nach oben verschoben, wodurch der Anschlag 8 in den Flugkreis der Klinke 7 gelangt. Dadurch lässt sich die Leine 20 nicht mehr abrollen. Will man dem Hund mehr Bewegungsraum geben, dann muss man von Hand den Schieber 15 in die gezeigte Stellung drücken. Da das Ritzel jedoch, wie in Figur 1 schematisch gezeigt, in der Führung 6 verschieblich ist, bewegt es sich beim Aufrollen der Leine 20 vom Anschlag 8 weg, so dass ein Aufrollen der Seiltrommel 9 unabhängig von der Stellung des Schiebers 15 möglich ist.

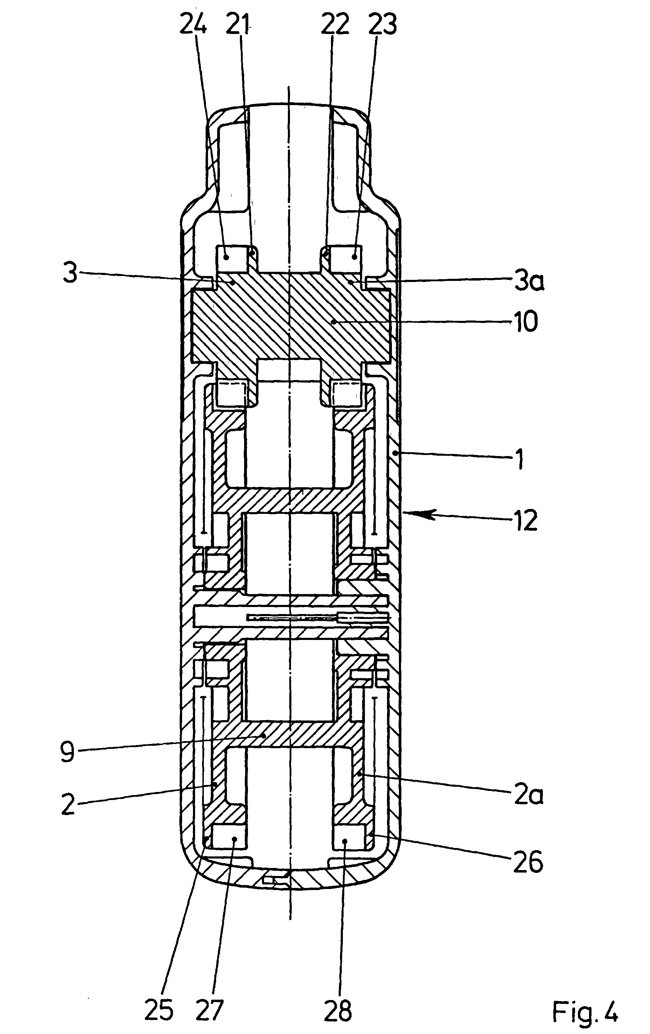

Die Figur 4 verdeutlicht, wie in dem Gehäuse 1 der Hunde-Rollleine 12 die Seiltrommel 9 mit den beiden Zahnrädern 2, 2a und der Zylinder 10 mit den beiden Ritzeln 3, 3a gelagert sind. Zu erkennen ist, dass der Zylinder 10 zwei flanschartige Scheiben 21, 22 hat, an welchen außenseitig Zähne 23, 24 der Ritzel 3, 3a angeformt sind. Entsprechend haben die Zahnräder 2, 2a Scheiben 25, 26, an welchen innenseitig Zähne 27, 28 angeformt sind. Diese Scheiben 21, 22, 25, 26 erhöhen die Festigkeit der Zähne 23, 24, 27, 28.

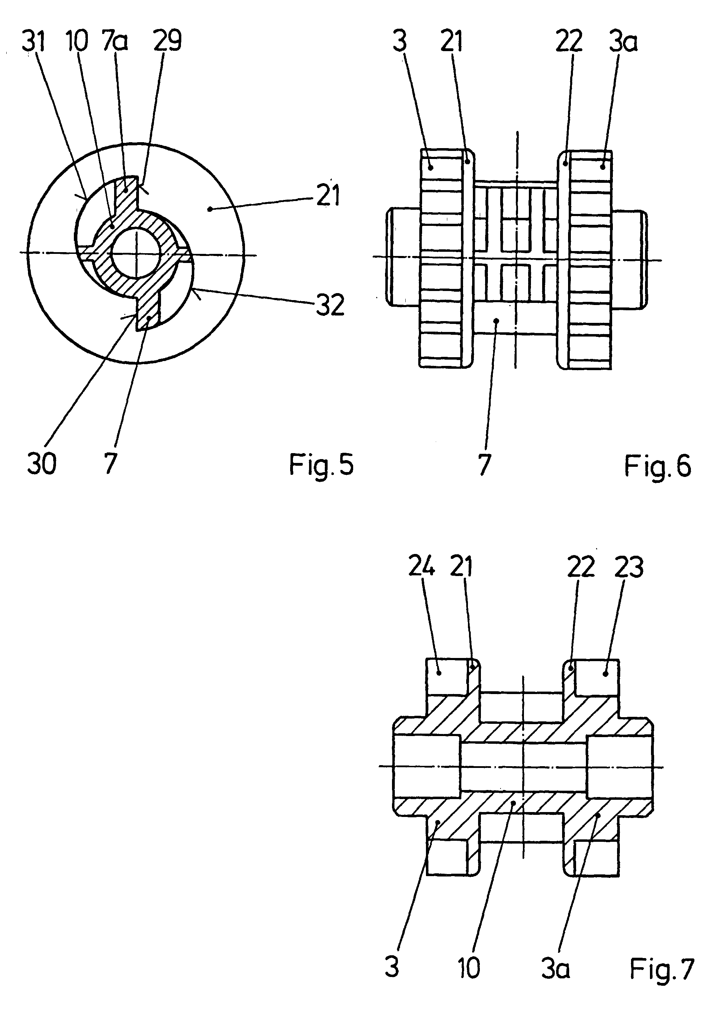

Die Schnittdarstellung gemäß Figur 5 lässt erkennen, dass der Zylinder 10 180° gegenüberliegend zwei radial sich nach außen erstreckende Klinken 7, 7a hat. Diese Klinken 7, 7a haben jeweils an einer Seite eine steile Flanke 29, 30, während auf der jeweils anderen Seite eine Rampe 31, 32 gleichmäßig ansteigend zum radial äußersten Ende der Klinke 7, 7a führt. Dadurch ist sichergestellt, dass die Klinken 7, 7a bei Drehung im Uhrzeigersinn vom Anschlag 8 gehalten, in umgekehrter Drehrichtung jedoch vom Anschlag 8 abgedrängt werden.

Die Figuren 6 und 7 dienen der zusätzlichen Verdeutlichung der Gestaltung des Zylinders 10 mit den beiden Ritzeln 3, 3a, den Scheiben 21, 22 und den Zähnen 23, 24.

## Patentansprüche

1. Hunde-Rollleine, welche in einem Gehäuse eine in Aufwickelrichtung vorgespannte Seiltrommel (9) lagert, die koaxial mit einem Zahnrad (2) verbunden ist und bei der eine einen gehäusefesten Anschlag (8) aufweisende Rücklaufsperre zum Blockieren des Zahnrades (2) in einer Drehrichtung vorgesehen sind, **dadurch gekennzeichnet, dass** die Rücklaufsperre durch ein mit dem Zahnrad (2) kämmendes Ritzel (3) gebildet ist, welches eine Achse (4) hat, die in einer zumindest in etwa koaxial zu der Drehachse (5) des Zahnrades verlaufenden Führung (6) des Gehäuses (1) verschiebbar gelagert ist, dass das Ritzel (3) oder eine mit ihm verbundene Klinke (7) in einer Endstellung der Achse (4) gegen den gehäusefesten Anschlag (8) anliegt, bei in entgegengesetzter Position verschobener Achse (4) jedoch frei drehbar gehalten ist, und dass entgegen der Kraft einer Feder (18) wirkende Mittel zum Trennen des Anschlags (8) und des Ritzels (3, 3a) vorgesehen sind.

2. Hunde-Rollleine nach Anspruch 1, **dadurch gekennzeichnet, dass** der Anschlag (8) an einem Schieber (15) vorgesehen ist, welcher teilweise aus dem Gehäuse (1) ragt und durch Führungen (16, 17) gegen die Kraft der Feder (18) aus einer Sperrstellung in einer das Ritzel (3, 3a) freigebenden Stellung verschiebbar angeordnet ist.

3. Hunde-Rollleine nach Anspruch 1, **dadurch gekennzeichnet, dass** die Achse (4) zum Verschieben von Hand aus der Führung (6) des Gehäuses (1) herausragt.

4. Hunde-Rollleine nach zumindest einem der vorangehenden Ansprüche, **dadurch gekennzeichnet, dass** sie zwei parallel zueinander angeordnete Zahnräder (2, 2a) und entsprechend zwei parallel zueinander angeordnete Ritzel (3, 3a) hat und dass die Ritzel (3, 3a) durch einen die Klinke (7) aufweisenden Zylinder (10) miteinander verbunden sind.

5. Hunde-Rollleine nach zumindest einem der vorangehenden Ansprüche, **dadurch gekennzeichnet, dass** das Ritzel (3) oder die beiden Ritzel (3, 3a) durch eine Feder (11) in seiner Verdrehbarkeit geringfügig gehemmt gelagert ist.

6. Hunde-Rollleine nach Anspruch 6, **dadurch gekennzeichnet, dass** am Gehäuse (1) ein manuell betätigbarer Sperrschieber (19) zum Blockieren des den Anschlag (8) aufweisenden Schiebers (15) in einer das Ritzel (3, 3a) freigebenden Stellung angeordnet ist.

7. Hunde-Rollleine nach zumindest einem der vorangehenden Ansprüche, **dadurch gekennzeichnet, dass** die Ritzel (3, 3a) und die Zahnräder (2, 2a) jeweils an einer Seite ihrer Zähne (23, 24; 27, 28) eine stirnseitig mit den Zähnen (23, 24; 27, 28) verbundene Scheibe (21, 22; 25, 26) aufweisen.

## Claims

1. Self-reeling dog-leash storing in a casing a cord-drum (9) which is pre-tensioned in the winding-up direction and which is coaxially connected to a gear wheel (2) and adjacent to which a back-run preventer with a stop (8) fixed with respect to the casing for jamming the gear wheel (2) in one direction of rotation is provided, **characterized in that** the back-run preventer is formed by a pinion (3) which meshes with the gear wheel (2) and has an axle (4) displaceably mounted in a guide (6) in the casing (1) that extends at least approximately coaxially with the axle (5) of the gear wheel, **in that** the pinion (3) or a catch (7) connected thereto abuts against the fixed stop (8) in one end position of the axle (4) but is freely rotatable when the axle (4) is shifted to its opposite position, and **in that** means acting against the force of a spring (18) are provided for separating the stop (8) and the pinion (3, 3a).

2. Self-reeling dog-leash according to Claim 1, **characterized in that** the stop (8) is provided on a slide (15) which partly projects from the casing (1) and is arranged displaceably through guides (16, 17) against the force of the spring (18) from a locked position [into] a position releasing the pinion (3, 3a).

3. Self-reeling dog-leash according to Claim 1, **characterized in that** the axle (4) sticks out of the guide (6) in the casing (1), for shifting by hand.

4. Self-reeling dog-leash according to at least one of the preceding claims, **characterized in that** it has two gear wheels (2, 2a) arranged parallel with each other and, correspondingly, two pinions (3, 3a) arranged parallel with each other, and **in that** the pinions (3, 3a) are interconnected by a cylinder (10) which carries the catch (7).

5. Self-reeling dog-leash according to at least one of the preceding claims, **characterized in that** the rotatability of the pinion (3) or of both pinions (3, 3a) is impeded slightly by a spring (11).

6. Self-reeling dog-leash according to Claim 6 [*sic*], **characterized in that** a manually operable locking slide (19) is arranged on the casing (1), for jamming the slide (15) carrying the stop (8) in a position releasing the pinion (3, 3a).

7. Self-reeling dog-leash according to at least one of the preceding claims, **characterized in that** the pinions (3, 3a) and the gear wheels (2, 2a) each have on one side of their teeth (23, 24; 27, 28) a disc (21, 22; 25, 26) joined by its face to the teeth (23, 24; 27, 28).

## Revendications

1. Laisse à enrouleur pour chien qui porte, tourillonné dans un boîtier, un tambour de câble (9) précontraint dans le sens de l'enroulement et qui est relié coaxialement à une roue dentée (2), et dans laquelle un enclenchement anti-retour présentant une butée (8) solidaire du boîtier est prévu pour bloquer la roue dentée 2 dans un sens de rotation, **caractérisée en ce que** l'enclenchement anti-retour est formé par un pignon (3) engrenant dans la roue dentée (2), qui possède un axe (4) qui est monté mobile en translation dans un guide (6) du boîtier (1) qui s'étend au moins à peu près coaxialement à l'axe de rotation (5) de la roue dentée, **en ce que** le pignon (3), ou un cliquet (7) qui y est relié, s'appuie contre la butée (8) solidaire du boîtier dans une position extrême de l'axe (4), mais est maintenu librement rotatif lorsque l'axe (4) est poussé dans une position opposée et **en ce qu'**il est prévu des moyens agissant à l'encontre de la force d'un ressort (18) pour séparer la butée (8) et le pignon (3, 3a).

2. Laisse à enrouleur pour chien selon la revendication 1, **caractérisée en ce que** la butée (8) est prévue sur un poussoir (15) qui fait partiellement saillie en dehors du boîtier (1) et qui est disposée de façon à pouvoir se déplacer en translation, dans des guides (16, 17) à l'encontre de la force du ressort (18), d'une position d'enclenchement à une position qui libère le pignon (3, 3a).

3. Laisse à enrouleur pour chien selon la revendication 1, **caractérisée en ce que** l'axe (4) fait saillie en dehors du guide (6) du boîtier (1) pour qu'on puisse le déplacer à la main.

4. Laisse à enrouleur pour chien selon au moins une des revendications précédentes, **caractérisée en ce qu'**elle comprend deux roues dentées (2, 2a) disposées parallèlement entre elles et, de façon correspondante, deux pignons (3, 3a) disposés parallèlement entre eux et **en ce que** les pignons (3, 3a) sont reliés l'un à l'autre par un cylindre (10) qui présente le cliquet (7).

5. Laisse à enrouleur pour chien selon au moins une des revendications précédentes, **caractérisée en ce que** le pignon (3) ou les deux pignons (3, 3a) sont montés rotatifs avec une légère retenue dans leur liberté de rotation assurée par un ressort (11).

6. Laisse à enrouleur pour chien selon la revendication 6, **caractérisée en ce que**, sur le boîtier (1), est disposé un poussoir d'enclenchement (19) pouvant être actionné manuellement, qui sert à bloquer le poussoir (15) portant la butée (8) dans une position qui libère le pignon (3, 3a).

7. Laisse à enrouleur pour chien selon au moins une des revendications précédentes, **caractérisée en ce que** les pignons (3, 3a) et les roues dentées (2, 2a) présentent chacun sur un côté de leurs dents (23, 24 ; 27, 28) un disque (21, 22 ; 25, 26) qui est relié aux dents (23, 24 ; 27, 28) en position frontale.
